# EUROPÄISCHE PATENTSCHRIFT

(11) **EP 0 432 768 B1**
(45) Veröffentlichungstag und Bekanntmachung des Hinweises auf die Patenterteilung: **01.03.1995**
(21) Anmeldenummer: 90123996.2
(22) Anmeldetag: 12.12.1990
(51) Int. Cl.: B65G 23/42, B23Q 7/14, B23Q 7/03

(54) **Schrittweise bewegte Transporteinrichtung**
Incrementally moving transport device
Dispositif de transport à avance pas à pas

(30) Priorität: 15.12.1989 DE 3941527; 13.02.1990 DE 4004426
(43) Veröffentlichungstag der Anmeldung: 19.06.1991
(73) Patentinhaber: Bihler, Otto, D-87642 Halblech (DE)
(72) Erfinder: Bihler, Otto, D-87642 Halblech (DE)
(74) Vertreter: Weickmann, Heinrich, Dipl.-Ing.

(56) Entgegenhaltungen:
- EP-A- 0 049 395
- DE-C- 186 710
- DE-C- 1 121 546
- DE-U- 7 907 623
- FR-A- 1 454 745
- FR-A- 2 481 679
- US-A- 3 938 643

## Beschreibung

Die Erfindung betrifft eine schrittweise bewegte Transporteinrichtung, insbesondere zum Einsatz in Bearbeitungsgeräten, gemäß dem Oberbegriff des Anspruch 1, wie aus US-A-3 938 643 bekannt.

Schrittweise bewegten Transporteinrichtungen müssen insbesondere bei der Bearbeitung und Montage von Kleinteilen mit sehr hoher Schrittfrequenz von beispielsweise 200 bis 400 Schritten pro Minute bewegt werden und andererseits mit sehr hoher Positionierungsgenauigkeit nach jedem Schritt zum Stillstand gebracht werden, insbesondere dann, wenn eine Bearbeitung durch stationär angebrachte Bearbeitswerkzeuge beabsichtigt ist. Die Positionierungsgenauigkeit muß dabei gelegentlich in der Größenordnung von einigen »m bis einigen 10 »m liegen.

Es ist bekannt, solche Transportbänder durch herkömmliche Schrittmotore anzutreiben. Dabei ergibt sich die Schwierigkeit, daß auch bei hoher Positionierungsgenauigkeit der Schrittschaltmotore, also dann, wenn die Winkeleinstellgenauigkeit der Schrittschaltmotore sehr gut ist, die Positionierungsgenauigkeit des Transportbandes unzureichend sein kann, etwa wegen mangelnder Rundheit der Umlenkrollen und/oder insbesondere wegen eines Abriebs der Umlenkflächen auf den Umlenkrollen. Dabei ist zu berücksichtigen, daß eine Radiusveränderung der Umlenkflächen um den Betrag X zu einer Längenveränderung und damit zu einer Positionierungsungenauigkeit in Bandlängsrichtung von 6,28 X führt.

Der Erfindung liegt die Aufgabe zugrunde, bei einer Transporteinrichtung der eingangs bezeichneten Art mit einfachen Mitteln die Positionierungsgenauigkeit zu verbessern und über längere Betriebsperioden auch bei eintretendem Abtrieb zu erhalten.

Zur Lösung dieser Aufgabe wird erfindungsgemäß vorgeschlagen, daß die Umlenkungen antriebslos sind, sowie daß der Schrittantrieb von einer längs eines Trums des Transportbandes oszillierend hin- und herbeweglichen Bandklemmvorrichtung gebildet ist, welche bei Bewegung entsprechend der beabsichtigten Vorschubrichtung des Transportbandes dieses klemmt und mitnimmt und bei Bewegung entgegen dieser Vorschubrichtung des Transportbandes außer Klemmeingriff mit dem Transportband ist und ferner von einer Bandarretierungsvorrichtung, welche das Transportband in Umlaufrichtung festhält, wenn die Klemmvorrichtung außer Klemmeingriff mit dem Transportband steht und das Transportband dann freigibt, wenn die Klemmvorrichtung in Klemmeingriff mit dem Transportband steht, wobei vorzugsweise in jedem Betriebszeitpunkt das Transportband entweder von der Bandklemmvorrichtung oder von der Bandarretierungsvorrichtung erfaßt ist.

Bei der erfindungsgemäßen Antriebsausbildung werden Ungenauigkeiten des Vorschubschritts ohne weiteres dadurch ausgeschaltet, daß man die Klemmvorrichtung zwischen ortsfesten und ggf. einstellbaren Anschlägen hin- und heroszillieren lässt. Ungenauigkeiten wegen Unrundheit der Umlenkorgane und/oder wegen Durchmesserveränderungen der Umlenkorgane infolge Abrieb sind ebenfalls ausgeschaltet. Höchste Genauigkeit läßt sich dann erzielen, wenn der Schrittantrieb in demjenigen Wegbereich des Schleifenumlaufs angeordnet ist, in dem das Band gegenüber stationären Bearbeitungswerkzeugen positioniert werden muß. Eine ausreichende Genauigkeit ergibt sich aber auch dann, wenn der Schrittantrieb an dem Rücklauftrum des Bandes angreift, was unter Umständen aus Gründen der räumlichen Unterbringung vorteilhafter sein kann.

Die Erreichung von hohen Schrittfrequenzen von z.B. 200 bis 400 Schritten pro Minute bei Hüben in der Größenordnung von etwa 10 bis 200 mm bringt keine Schwierigkeiten, da die Bandklemmvorrichtung beispielsweise durch einen Pleueltrieb oder einen Kurventrieb bewegt werden kann. Auch ein elektrischer Antrieb durch einen Tauchmagneten ist denkbar. In allen Fällen kann die Positionierungsgenauigkeit dadurch festgelegt werden, daß die Bandklemmvorrichtung an beiden Enden ihrer hin- und hergehenden Oszillationsbewegung gegen Anschläge fährt.

Die Klemmvorrichtung könnte ggf. auch durch eine formschlüßige Mitnahmeeinrichtung ersetzt sein. Auch die Bandarretierungsvorrichtung kann formschlüßig oder kraftschlüßig ausgebildet sein, wobei Kraftschluß insbesondere wieder Arretierung durch Klemmen bedeutet. Höchste Positionierungsgenauigkeit erreicht man dann, wenn die Bandarretierungsvorrichtung als Positionskorrekturvorrichtung ausgebildet ist in der Weise, daß an der Bandarretierungsvorrichtung ein Bandeingriffsorgan mit mindestens einer zu seiner Eingriffsrichtung geneigten Eingriffsschräge angebracht ist, welche bei beginnendem Eingriff die Bandstellung ggf. unter Überwindung des Klemmeingriffs der Bandklemmvorrichtung korrigiert.

Die Umlenkungen sind bevorzugt von drehbar gelagerten Umlenkrollen gebildet, wobei diese Umlenkrollen im Hinblick auf die Art des Antriebs nicht angetrieben sein müssen; sie können deshalb mit relativ geringem Schwungmoment ausgeführt werden, was zu einer weiteren Steigerung der Positionierungsgenauigkeit führt.

Das Transportband kann spannbar sein, etwa in der Weise, daß mindestens eine der Umlenkungen oder ein zwischen den Umlenkungen gelegenes ggf. gefedertes Spannorgan mit einer Spannvorrichtung verbunden ist. Das Spannen und ggf. Nachspannen beeinflußt die Positionierungsgenauigkeit nicht.

Will man einzelne Teile, die zu bearbeiten oder mit anderen Teilen zu vereinigen sind, auf dem Transportband transportieren, so geschieht dies in der Weise, daß auf dem Transportband Teilehalter zum Transport von Teilen angebracht sind, insbesondere Werkstückhalter zum Transport von durch das Bearbeitungsgerät zu bearbeitenden Werkstücken.

Die Positionierung des Transportbandes bzw. der auf ihm angebrachten Teilehalter kann auch in Bandbreitenrichtung und in Banddickenrichtung auf einfache Weise dadurch gewährleistet werden, daß das Transportband zumindest auf einem Teil seines Umlaufweges durch Linearführungsmittel geführt ist, bei Verwendung im Zusammenhang mit einem Bearbeitungsgerät in demjenigen Teil seines Umlaufweges, in dem Bearbeitungsvorgänge an den transportierten Werkstücken erfolgen.

Die bisher im Einsatz befindlichen Transportbänder waren auch deshalb unbefriedigend, weil sie den bei hoher Transportschrittfrequenz auftretenden Belastungen nicht auf längere Zeit gewachsen waren. Versuche mit Ketten- und Schuppenbändern haben gezeigt, daß vorzeitig Störungen und Zerstörungen eingetreten sind, die gerade an teuren Hochleistungsmaschinen zu erheblichen Betriebsausfallzeiten und damit zu verringerter Leistung geführt haben, ggf. auch zur Zerstörung von Bearbeitungswerkzeugen.

Besondere Schwierigkeiten treten dann auf, wenn an dem Transportband Halter angebracht werden müssen, die einerseits in der jeweiligen Bearbeitungsstrecke stabil auf dem Transportband aufliegen müssen, andererseits aber den Umlenkungen, also insbesondere den Umlenkrollen, folgen können.

Der Erfindung liegt deshalb weiter die Aufgabe zugrunde, mit einfachen Mitteln ein Transportband bereitzustellen, welches einem Dauerbetrieb gewachsen ist und welches eine einfache Anbringung von Teilehaltern gestattet. Zur Lösung dieser Aufgabe wird erfindungsgemäß weiter vorgeschlagen, daß das Transportband von einem Metallband oder dergleichen, insbesondere Stahlband, gebildet ist und daß in einem mittleren Bereich des Metallbandes Zungen derart freigeschnitten sind, daß sie in zur Schleifenachse parallelen Gelenkzonen mit dem Metallband einstückig und biegeelastisch zusammenhängen, wobei diese Zungen zur Aufnahme von Teilehaltern, insbesondere Werkstückhaltern, ausgebildet sind und wobei die Zungen ggf. der Einwirkung der Linearführungsmittel unterliegen.

Die Anordnung der Zungen sorgt für einen optimal einfachen Aufbau des Transportbandes bei gleichzeitiger Schaffung der Möglichkeit, Teilehalter auf dem Transportband so anzubringen, daß diese in den Bearbeitungsstrecken eine stabile Lage einnehmen und andererseits den Umlauf um die Umlenkungen nicht stören. Grundsätzlich ist die Möglichkeit, ein Band durch die Zungenbildung zum ungestörten Umlauf um die Umlenkungen geeignet zu machen und gleichzeitig die Befestigung von Teilehaltern zu ermöglichen, auch bei Bandmaterialien denkbar, die nicht aus Stahl bestehen, beispielsweise bei Verwendung anderer Metalle oder auch bei Verwendung von hochfesten Kunststoffen. Die Zungen spreizen sich an den Umlenkungen jeweils aus der Bandrundung ab und liegen in den zwischen den Umlenkungen sich erstreckenden Bandtrumen in der Ebene der Bandtrume, wo sie durch Linearführungsmittel stabilisiert werden können, etwa durch Gleitnuten, welche die Bandränder erfassen und sich mit den Zungen überlappen.

Eine besonders unempfindliche Bandkonstruktion erhält man dadurch, daß die Zungen durch im wesentlichen U-förmige Freischnittlinien begrenzt sind, deren Schenkelabschnitte im wesentlichen in der Bandlängsrichtung verlaufen und deren Stegabschnitte im wesentlichen quer zur Bandlängsrichtung verlaufen. Dabei können die Zungenenden gerundet sein.

Für die Aufnahme von Teilehaltern mit großer Basisfläche wird empfohlen, daß jeweils zwei durch eine gemeinsame Gelenkzone miteinander verbundene Zungen eine Doppelzunge bilden, welche gemeinsam zur Aufnahme eines starren Teilehalters ausgebildet sind. Bei einer solchen Ausbildung bleibt die Auslenkung der Einzelzungen im Bereich der Umlenkungen relativ klein, was vorteilhaft sein kann. Außerdem tritt durch die Anbringung von Teilehaltern auf Doppelzungen bereits eine gewisse Stabilisierung der Teilehalter ein, unabhängig von der durch Linearführungsmittel möglichen Stabilisierung. Die Befestigung von Teilehaltern auf den Zungen kann dadurch ermöglicht werden, daß die Zungen mit Perforationen zur Befestigung von Teilehaltern ausgeführt sind.

Wenn die Befestigungsmittel zur Befestigung der Teilehalter auf den Zungen die Zungenflächen auf der Schleifeninnenseite überragen, so kann dies dadurch unschädlich gemacht werden, daß das Metallband mit Randbereichen auf Anlageflächen der Umlenkungen geführt ist, und daß zwischen den Anlageflächen in den Umlenkungen Ausnehmungen vorgesehen sind, welche an der Schleifeninnenseite des Metallbandes gelegene Befestigungsmittel zur Befestigung der Teilehalter aufnehmen. Angewandt auf den Vorzugsfall, daß die Umlenkungen als Umlenkrollen ausgebildet sind, führt dies dazu, daß die Umlenkrollen mit zylindrischen Anlageflächen für das Metallband und mit jeweils mindestens einer zwischen den zylindrischen Anlageflächen gelegenen Ringnut ausgeführt werden. An den Umlenkungen können auch seitliche Führungen für das Metallband angebracht sein, die mit den Kanten des Bandes in Eingriff treten, beispielsweise Flanschscheiben an den Enden der Umlenkrollen.

Bei den oben erwähnten hochfrequenten Transportsystemen bereitet bisher auch das Schließen des die Schleife bildenden Bandes an den einander zugekehrten Bandenden erhebliche Schwierigkeiten.

Viele Versuche, für Dauerbetrieb geeignete Verbindungen zu schaffen, sind gescheitert. Es wird deshalb zur Schaffung eines dauerbelastbaren Bandschloßes erfindungsgemäß weiter vorgeschlagen, daß das Transportband an der Verbindungsstelle von zwei stumpf einander gegenüberliegenden Bandenden durch ein Klemmplattenpaar oder Klemmblechepaar miteinander verbunden ist, dessen Klemmplatten bzw. Klemmbleche schmaler sind als die Metallbandbreite, wobei diese Klemmplatten bzw. Klemmbleche an der Schleifeninnenseite und der Schleifenaußenseite des Transportbandes anliegend jeweils den Stoß der Bandenden in Schleifenumfangsrichtung überbrücken und durch Verbindungsmittel miteinander verbunden sind, welche die beiden Bandenden durchdringen.

Es hat sich gezeigt, daß dann, wenn die Klemmplatten in sich starr sind, die Verbindungsmittel hinsichtlich der Standzeit verbessert werden, weil die Verbindungsmittel dann zwar mit den starren Platten im Raum Schwingungen ausführen können, andererseits aber keine oder keine wesentlichen Schwingungen der Verbindungsmittel relativ zu den Klemmplatten und relativ zu den Bandenden auftreten. Es hat sich auch gezeigt, daß der Umlauf der Klemmplatten um die Umlenkungen ohne Störungen vor sich geht, wenn die Klemmplatten einerseits so kurz gehalten werden, daß eine ausreichende Anzahl von Verbindungsmittel angesetzt werden kann und wenn andererseits die Klemmplatten nach Möglichkeit schmaler gehalten werden als die Bandbreite. Durch Abrundungen der Endplatten an ihren dem jeweiligen Bandende zugekehrten Endkanten kann der Bandlauf im Bereich des Schloßes weiter verbessert werden. Als Verbindungsmittel kommen insbesondere Schraubbolzenmuttereinheiten in Frage. Andererseits kann die Verwendung von Klemmblechen vorteilhaft sein im Hinblick auf deren bessere Anschmiegung an die Umlenkrollen, wenn die Klemmbleche entsprechend elastisch sind.

Das Problem der Hinwegführung der Klemmplatten und der sie verbindenden Verbindungsmittel über die Umlenkungen kann, ähnlich wie im Fall der Befestigungsmittel für Teilehalter dadurch gelöst werden, daß das Transportband an den Umlenkungen jeweils mit einer Randzone auf einer Anlagefläche aufliegt, und daß zwischen den Anlageflächen jeweils eine Ausnehmung für die Aufnahme der Klemmplatten in den Umlenkungen vorgesehen ist. Im Regelfall wird es sich ermöglichen lassen, daß ein- und dieselbe Ausnehmung sowohl für die Befestigungsmittel der Teilehalter als auch für die Klemmplatten und deren Verbindungsmittel dient.

Ist eine Arretierungsvorrichtung mit einem formschlüßig in das Band eingreifenden Eingriffsorgan vorhanden, so kann man dieses Eingriffsorgan bevorzugt dort in das Band eingreifen lassen, wo Teilehalter angebracht sind; man kann also Eingriffsausnehmungen in dem jeweiligen Teilehalter und/oder der Klemmplatte vorsehen. Dies ist insbesondere dann vorteilhaft, wenn sich die Transporteinrichtung im Bereich der Bearbeitungsstationen befindet.

Die beiliegenden Figuren erläutern die Erfindung anhand eines Ausführungsbeispiels; es stellen dar:
- Figur 1: eine schematische Seitenansicht einer erfindungsgemäßen Transporteinrichtung;
- Figur 2: eine Klemmvorrichtung eines Antriebs;
- Figur 3: eine Seitenführung des Transportbandes in einer Bearbeitungsstrecke;
- Figur 4: eine Draufsicht auf ein Transportband im Bereich einer Anbringungsstelle für einen Teilehalter;
- Figur 4a: den Verlauf des Transportband im Bereich einer Umlenkung;
- Figur 5: eine Verbindung der Bandenden des Transportbandes;
- Figur 6: einen Schnitt durch eine Umlenkrolle des Transportbandes und
- Figur 7: einen Arbeitszyklus der Bandklemmvorrichtung und der Bandarretiervorrichtung.
- Figur 8: eine abgewandelte und ergänzte Ausführungsform.

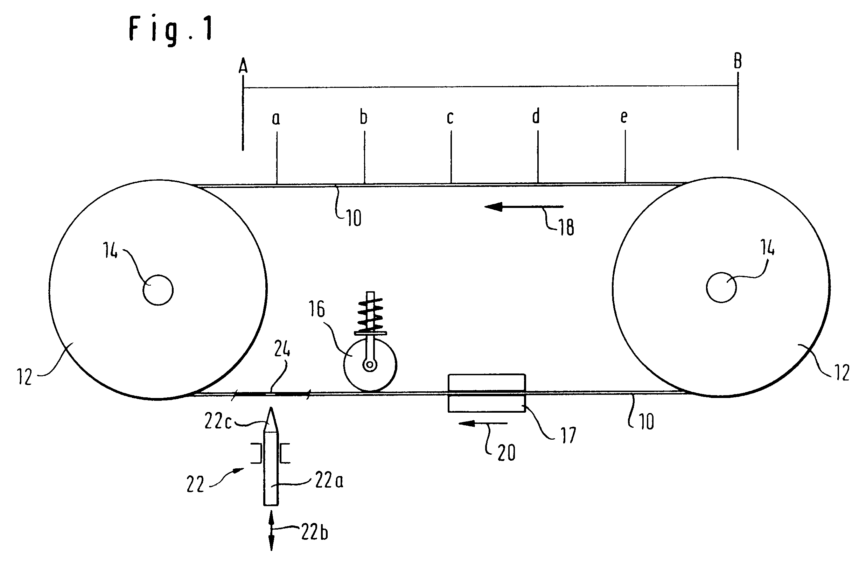

In Figur 1 ist das Transportband ganz allgemein mit 10 bezeichnet. Dieses Transportband läuft über zwei Umlenkrollen 12, welche auf Wellen 14 drehgelagert sind. Das Transportband ist durch eine Spannrolle 16 gespannt und wird schrittweise durch eine Bearbeitungsstrecke A-B bewegt. Längs der Bearbeitungsstrecke A-B sind Bearbeitungspositionen mit a bis e bezeichnet. Die Umlenkrollen 12 sind antriebslos. Der Antrieb erfolgt durch eine transportierende Bandklemmvorrichtung 17, die das Untertrum des Transportbandes alternierend einklemmt, vorwärts bewegt, freigibt und dann wieder zurückläuft. Die Antriebsrichtung ist mit dem Pfeil 18 angedeutet. Jedesmal wenn die Bandklemmvorrichtung 17 das Band freigibt und in Pfeilrichtung 20 zurückläuft, ist eine Bandarretiervorrichtung 22 wirksam. Diese umfaßt einen konisch zugespitzten Arretierbolzen 22a, der in Pfeilrichtung 22b verschiebbar ist und in Löcher 24 des Bandes 10 eingreifen kann. Wenn das konische Ende 22c des Arretierbolzens 22a in ein Loch 24 eintaucht, wird die Position des Bandes 10 korrigiert, wobei das Band 10 entgegen der Klemmwirkung in der Klemmvorrichtung 17 verschoben wird.

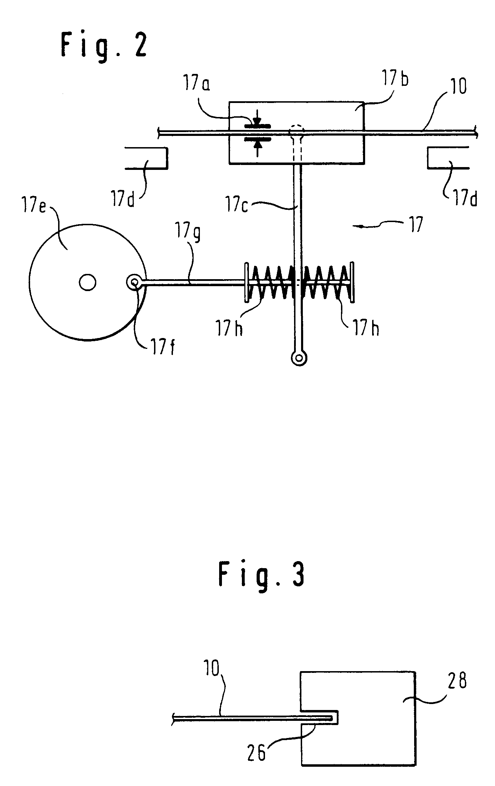

In Figur 2 erkennt man weitere Einzelheiten über die Bandklemmvorrichtung 17. Diese Bandklemmvorrichtung 17 umfaßt eine Klemmzange 17a auf einem Klemmzangenträger 17b. Der Klemmzangenträger 17b ist durch einen Schwenkhebel 17c in Längsrichtung des Bandes 10 zwischen zwei Anschlägen 17d hin und her verstellbar. Wenn sich der Klemmzangenträger 17b in Figur 2 nach rechts bewegt, ist das Band 10 durch die Klemmzange 17a eingespannt und wird mitgenommen. Wenn dagegen der Klemmzangenträger 17b in Figur 2 von rechts nach links zurückläuft, ist die Klemmzange 17a gelöst und das Band 10 steht still. Der Antrieb des Schwenkhebels 17c erfolgt von einem Pleuel 17e aus, dessen Pleuelzapfen 17f über die Pleuelstange 17g mit dem Schwenkhebel 17c verbunden ist und zwar unter Einschaltung eines Paares von Druckfedern 17h. Durch den Pleueltrieb wird der Klemmzangenträger 17b jeweils bis gegen die Anschläge 17d angefahren, wobei dann jeweils eine der Druckfedern 17h komprimiert wird. Auf diese Weise ist eine endliche Verweilzeit des Klemmzangenträgers 17b in den beiden durch die Anschläge 17d definierten Endstellungen gewährleisten Während dieser endlichen Verweilzeiten kann die Klemmzange 17a auf Klemmung bzw. Lösung des Transportbandes 10 geschaltet werden.

Während der Verweilzeit in der rechten Endstellung des Klemmzangenträgers 17b fährt, noch bevor die Klemmzange 17a gelöst wird, der Arretierstift 22a mit seiner konischen Spitze 22c in ein Loch 24 ein. Durch die konische Spitze 22c wird dabei die Positionierung des Transportbandes 10 exakt korrigiert, wobei eine allenfallsige Korrekturbewegung des Transportbandes 10 entgegen der Klemmwirkung der Klemmzange 17a bei stillstehendem Klemmzangenträger 17 stattfindet. Es ist allerdings auch denkbar, daß beim Einfahren des Konus 22c in das Loch 24 die Klemmzange 17a bereits ganz oder teilweise gelöst ist, so daß die Positionskorrektur des Transportbandes 10 in der Klemmzange 17a gegen reduzierte oder vollständig unterdrückte Klemmwirkung stattfindet. Es ist günstig, wenn das Transportband ständig unter Positionskontrolle gehalten ist, entweder durch die Klemmzange 17a oder durch die Arretiervorrichtung 22, wobei allenfalls während des Einfahrens des Arretierstifts 22a in das Loch 24 für die Positionierungskorrektur die Festlegung des Transportbandes 10 kurzzeitig unterbrochen ist.

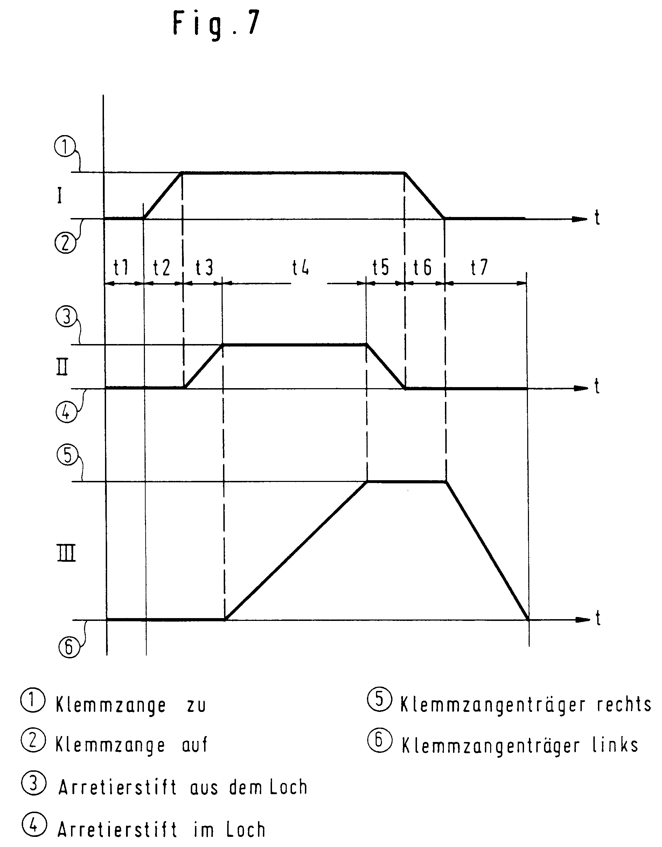

In Figur 7 ist der Ablauf eines Arbeitszyklus dargestellt. In Richtung t ist jeweils die Zeitachse dargestellt. In der Zeile I ist die Klemm- und Lösebewegung der Klemmzange 17a dargestellt, in der Zeile II die Bewegung des Arretierstifts 22 und in der Zeile III die Bewegung des Klemmzangenträgers 17.

Im Zeitraum t1 ist die Klemmzange 17a gelöst. Der Arretierstift 22a ist in ein Loch 24 eingefahren Der Klemmzangenträger 17 steht still und befindet sich in seiner linken Position gemäß Figur 2.

Im Zeitraum t2 schließt die Klemmzange 17a. Der Arretierstift 22a befindet sich noch im Loch 24 und der Klemmzangenträger 17 steht nach wie vor still in der linken Endposition gemäß Figur 2, wobei die Weiterdrehung des Pleuels 17e dank der Wirkung der Schraubendruckfedern 17h keinen Einfluß auf die Stellung des Schwenkhebel 17c besitzt.

Im Zeitraum t3 wird der Arretierstift 22a gemäß Figur 1 nach unten zurückgezogen, wobei der Klemmzangenträger 17b immer noch stillsteht und zwar in seiner linken Endposition und die Klemmzange 17a geklemmt ist.

Im Zeitraum t4 ist die Klemmzange 17a weiterhin geklemmt und der Arretierstift 22a weiterhin nach unten zurückgezogen. Der Klemmzangenträger 17 bewegt sich von seiner linken in seine rechte Endstellung.

Im Zeitraum t5 fährt der Arretierstift 22a wieder in ein Loch 24 ein, wobei der Klemmzangenträger 17b stillsteht und die Klemmzange 17a weiterhin geklemmt ist.

Im Zeitraum t6 öffnet die Klemmzange 17a, während der Arretierstift 22a weiterhin in dem Loch 24 bleibt und der Klemmzangenträger 17b weiterhin in der rechten Endstellung gemäß Figur 2 verweilt, wobei die Weiterbewegung des Pleuels 17e durch die Schraubendruckfeder 17h kompensiert wird.

Im Zeitraum t7 bewegt sich der Klemmzangenträger 17b wieder nach links, wobei die Klemmzange 17a gelöst ist und der Arretierstift 22a in das Loch 24 eingefahren ist. Damit ist ein Zyklus beendet. Eine denkbare Abwandlung könnte, wie bereits weiter oben beschrieben, darin bestehen, daß das Einfahren des Arretierstifts 22a (Zeitraum t5) bereits beginnt, während die Zange schon ganz oder teilweise geöffnet ist. In diesem Fall müßte also in Zeile II die dem Zeitraum t5 zugeordnete Flanke des Kurvenverlaufs weiter nach rechts in den Zeitraum t6 verlegt werden.

Unter Bezugnahme auf Figuren 1 und 2 ist folgende Abwandlung möglich:
Nachdem der Klemmzangenträger 17b bei Erreichen des rechten Anschlags 17d seine rechte Endstellung erreicht hat, beginnt der Arretierstift 22a in Figur 1 seine Aufwärtsbewegung in Richtung auf das Loch 24 des Transportbandes 10. Dabei ist die Klemmzange 17a zunächst noch geschlossen und der Konus 22 greift lose in das Loch 24 ein, ohne zunächst eine Korrektur des Bandes zu bewirken. In diesem Zeitpunkt des losen Eingriffs des Konus 22c in das Loch 24 öffnet die Klemmzange 17a. Dann bewegt sich der Arretierstift 22a weiter nach oben, so daß der Konus 22c in formschüssigem Eingriff mit dem Loch 24 gelangt und eine allenfalls notwendige Korrektur der Bandposition durchgeführt wird. Während dieser Korrektur ist das Band, durch die Klemmzange 17a, nicht mehr erfaßt. Neben dem Arretierstift 22a kann eine zusätzliche stationäre Halteklemmvorrichtung an dem Band 10 eingreifen, welche zum Zwecke der Entlastung des Arretierstifts 22 das Band dann klemmt, wenn der Klemmzangenträger 17b in der Pfeilrichtung 20 der Figur 1 zurückfährt. Ist eine solche zusätzliche stationäre Halteklemmvorrichtung vorhanden, so wird empfohlen, daß die diese zusätzliche stationäre Halteklemmvorrichtung erst dann klemmend wirksam wird, wenn der Konus 22c in das Loch 24 voll eingetreten ist und eine etwa notwendige Korrektur der Bandposition bereits durchgeführt hat. Auf diese Weise ist sichergestellt, daß bei der Positionskorrektur des Bandes die Klemmkraft der zusätzlichen stationären Halteklemmvorrichtung nicht überwunden werden muß.

Es ist noch zu bemerken, daß zwei Klemmzangen 17a am Träger 17b vorgesehen sein können, etwa an beiden Rändern des Transportbandes 10.

Gemäß Figur 3 ist das Transportband 10 in seinem oberen Trum durch eine Führungsnut 26 eines Führungsblocks 28 geführt, so daß das Band in Breitenrichtung und Dickenrichtung exakt positioniert ist.

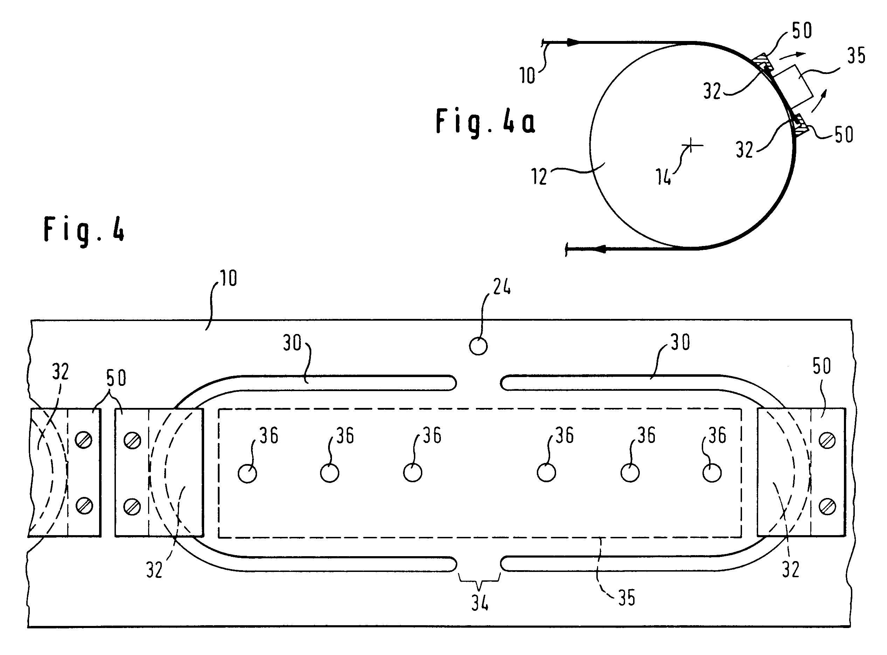

In Figur 4 erkennt man das Transportband 10, das als ein Stahlband, insbesondere V2a-Stahlband, ausgebildet ist. Aus dem Stahlband 10 sind durch U-förmige Freischnitte 30 Zungen 32 ausgeschnitten. Die Zungen 32 hängen durch Gelenkzonen 34 einstückig mit dem Stahlband 10 zusammen. Auf zwei gemeinsamen Zungen 32 wird ein Teileträger 35 befestigt, etwa dadurch, daß der Teileträger 35 mittels Schrauben auf die Zungen 32 aufgeschraubt wird, wobei die Schrauben Löcher 36 der Zungen 32 durchsetzen. Die Zungen treten bei dem Umlauf um die Umlenkrollen 12 aus dem Stahlband heraus und liegen in den geradlinigen Laufstrecken des Stahlbandes 10 in der Ebene des Stahlbandes. Es ist denkbar, jeweils einen Teileträger auch nur auf einer einzigen Zunge 32 anzuordnen. In diesem Fall wird man durchwegs gleichgerichtete Zungen verwenden. Die Zungen 32 sind in jedem Fall in einer Gelenkzone 34 gelenkig mit dem Stahlband 10 verbunden.

Aus Figuren 4 und 4a erkennt man, daß der Auslenkwinkel der Zungen 32 durch Auslenkwinkelbegrenzer 50 begrenzt ist. Diese Auslenkwinkelbegrenzer sind wie aus Figur 4 zu ersehen, so angeordnet, daß sie mit den freien Enden der Zungen 32 zusammenwirken. Die Auslenkwinkelbegrenzer 50 sind so bemessen, daß sie, wie aus Figur 4a ersichtlich, beim Durchlaufen der Teileträger 35 durch eine Umlenkung maximal bis zur Parallellage mit einer ebenen Basisfläche der Teileträger 35 ausgelenkt werden können und nicht weiter. Auf diese Weise ist sichergestellt, daß die Zungen 32 auch in den Umlenkbereichen stets eine annähernd definierte Lage einnehmen, auch wenn sie durch Schwerkraft und/oder Zentrifugalkraft belastet sind. In den geradlinigen Bewegungsabschnitten können die Zungen 32 dadurch in Paralellage zu dem jeweiligen Bandabschnitt gehalten werden, da die Zungen 32 von der Führungsnut 26 (Figur 3) noch erfaßt werden. Auf diese Weise sind Schwingungen der Teilehalter 35 sowohl in den Umlenkbereichen als auch in den geradlinigen Bewegungsabschnitten weitestgehend unterdrückt. Es ist auch denkbar, zwischen den freien Enden der Zungen 32 und den Auslenkwinkelbegrenzern 50 zur noch besseren Schwingungsunterdrückung Dämpfungsmittel vorzusehen.

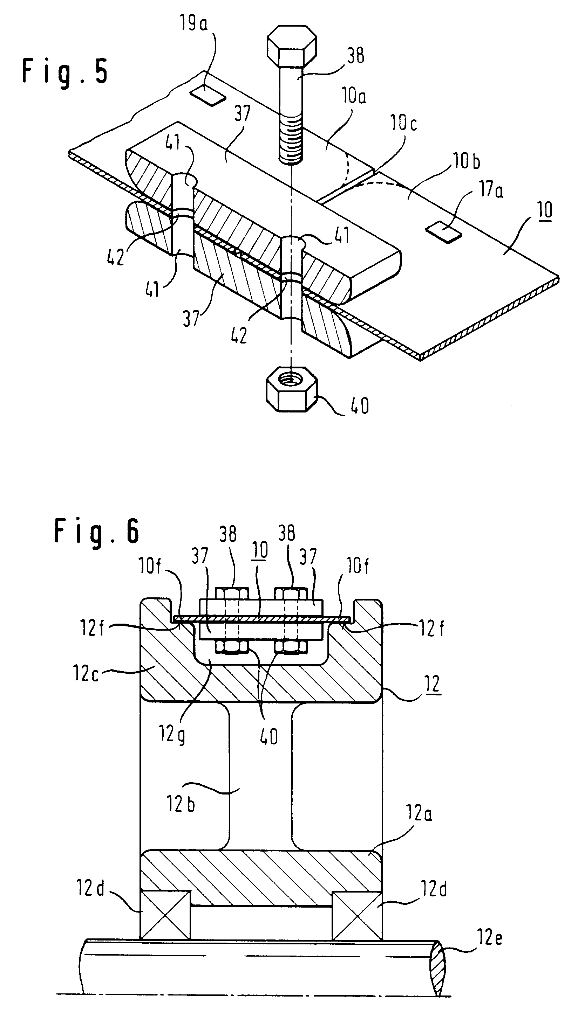

In Figur 5 erkennt man die Verbindung zwischen den beiden Enden 10a und 10b des Stahlbandes. Der Stoß 10c des Stahlbandes ist von zwei Klemmplatten 37 überbrückt, welche so kurz wie möglich gehalten sind, schmaler als das Stahlband 10 sind und durch Verbindungsbolzen 38 und Muttern 40 miteinander verklemmt sind. Die Verbindungsbolzen 38 durchsetzen Bohrungen 41 der Klemmplatten 37 und Perforationen 42 der beiden Stahlbandenden 10a und 10b.

Es empfiehlt sich, daß die Bandenden 10a und 10b mit den Klemmplatten 37 nicht nur reibschlüssig durch die Klemmwirkung verbunden sind, sondern daß auch eine formschlüssige Verbindung der Bandenden 10a und 10b mit den Klemmplatten 37 besteht, um jede Lageveränderung der Bandenden 10a und 10b relativ zueinander zu unterdrücken. Dies kann in der Weise bewerkstelligt werden, daß der Durchmesser der Schraubbolzen 38 exakt dem Durchmesser der Bohrungen 41 und der Performationen 42 entspricht. Die Stahlbandenden können, wie in Fig. 5 gestrichelt eingezeichnet, ausgeklinkt sein um einen ruhigeren Einlauf in die Umlenkrollen 12 zu erhalten.

In Figur 6 ist eine Umlenkrolle 12 im Detail dargestellt. Sie besteht aus einer Nabe 12a, Speichen 12b und einer Felge 12c. Die Nabe 12a ist mittels Kugellagern 12d auf einer Welle 12e drehbar gelagert. Auf der Felge 12c sind zylindrische Anlageflächen 12f für die Auflage von Randzonen 10f des Stahlbandes ausgebildet. Zwischen diesen zylindrischen Anlagezonen 12f befindet sich eine Ringnut 12g, welche so bemessen ist, daß sie die jeweils innere Klemmplatte 37 und die Muttern 40 aufnimmt, ebenso wie die inneren Teile von Befestigungsmitteln, mittels welcher die nicht dargestellten Teilehalter an den Zungen 32 befestigt sind.

Die erfindungsgemäße Transporteinrichtung erlaubt in einem Bearbeitungsgerät die Bearbeitung der Werkstücke von beiden Seiten des Transportbandes her.

Zu der Figur 1 ist noch folgendes nachzutragen:
Auf eine gesonderte Spannrolle 16 kann verzichtet werden, wenn eine der Umlenkungen 12 unter Spannung gehalten wird. Dabei empfiehlt es sich, im Hinblick auf die Bandbewegungsrichrung 18, gemäß Figur 1, die rechte Umlenkrolle nach rechts vorzuspannen, damit beim Vorschub und bei der Positionskorrektur die Bandposition durch ein Nachgeben der Umlenkrolle 12 nicht verfälscht wird.

Als Bearbeitungsgeräte kommen insbesondere Biege- und Stanzwerkzeuge zur Einwirkung auf die jeweiligen Werkstücke in Frage. Weiterhin können Bohr- oder Gewindebohreinrichtungen in einer der Positionen a bis e vorgesehen sein. Auch Montagewerkzeuge können in einer der Positionen a bis e vorgesehen sein, zum Beispiel Montagevorrichtungen zum Zusammensetzen von Isolatoren und Leitern von elektrischen Baugruppen.

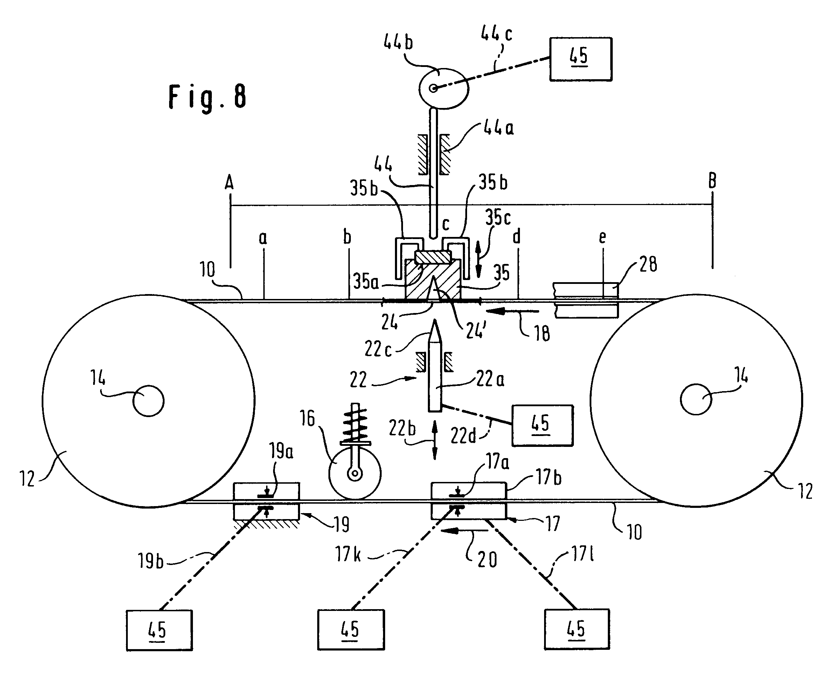

In Figur 8 ist eine veränderte und ergänzte Ausführungsform ähnlich der Figur 1 gezeigt. Es ist wiederum ein Stahlband 10 vorgesehen, wie es in den Figuren 1,4 und 6 dargestellt ist. Das Stahlband ist aus einem elastischen Stahlblechmaterial hergestellt. Die Bandarretiervorrichtung 22 ist in Figur 8 unterhalb des oberen Bandabschnitts dargestellt, welche durch die Bearbeitungsstrecke A-B läuft. Der Arretierstift 22a arbeitet mit konischen Ausnehmungen 24' zusammen, welche an den Teileträgern 35 angebracht sind und zwar in Flucht mit entsprechenden Löchern 24 des Bands 10. Es ist von beträchtlichem Vorteil, daß die Arretiervorrichtung an dieser Stelle angebracht ist, um den Ort der Teileträger 35 genau zu definieren. In Figur 8 ist nur ein Teileträger 35 vorgesehen. Es ist leicht zu verstehen, daß eine Vielzahl von Teileträgern an dem Band 10 befestigt sein können, so wie in Figuren 4 und 4a dargestellt. Neben der Klemmzange 17a ist eine stationäre Klemmzange 19a auf einer stationären Klemmzangenträgereinheit 19 angebracht. Sowohl die Klemmzange 17a als auch die Klemmzange 19a sind zum reibenden Eingriff mit dem Band 10 im Bereich von dessen Längszonen ausgebildet, so wie in Figur 5 dargestellt. Es besteht also keine Kollisionsgefahr zwischen den Klemmzangen 17a und 19a einerseits und den Teileträgern 35 sowie den Klemmplatten 37 andererseits.

Im Betrieb arbeitet die Klemmzange 17a so wie im Zusammenhang mit Figur 2 beschrieben. Wenn der Klemmzangenträger 17b an dem rechten Anschlag 17d angekommen ist, tritt der Arretierstift 22a mit seinem Konus 22c in die konische Ausnehmung 24' ein. Wenn der Konus 22c lose in die konische Ausnehmung 24' eingetreten ist, ist die Klemmzange 17a noch in reibendem Klemmeingriff mit dem Band 10. Nunmehr wird der Eingriff der Klemmzange 17a mit dem Band 10 gelöst während sich das Band 10 noch im Stillstand befindet. Nachdem die Klemmzange 17a gelöst worden ist, tritt der Konus 22c noch weiter in die konische Ausnehmung 24' ein, so daß der Konus 22c in vollflächigen Eingriff mit der konischen Ausnehmung 24' tritt. Auf diese Weise wird die Position des Bands 10 und die Position des Teileträgers 35 präzise korrigiert. Nach dieser Korrektur tritt die stationäre Klemmzange 19a in reibenden Klemmeingriff mit dem Band 10, wobei das Band 10 immer noch im Stillstand ist. Nun beginnt die nach links gerichtete Bewegung des Klemmzangenträgers 17b solange bis der Klemmzangenträger 17b an dem linken Anschlag 17d der Figur 2 anschlägt. Wenn der Klemmzangenträger 17b in Eingriff mit dem linken Anschlag 17d getreten ist, so bleibt er in der durch den Anschlag definierten Position für eine kurze Weile, während welcher die Schraubenfedern 17h deformiert werden. Während dieses Stillstands kommt die Klemmzange 17a zum reibenden Eingriff mit dem Band 10. Der Konus 22c wird aus der konischen Ausnehmung 24' zurückgezogen und schließlich wird die Klemmzange 19a vom reibenden Eingriff mit dem Band 10 gelöst. Nunmehr kann sich der Klemmzangenträger 17b wieder nach rechts in Figur 8 bewegen, so daß der Teileträger 35 in die Station b gelangt.

Der Teileträger 35 ist mit einer Zentrierausnehmung 35a für die Aufnahme eines Werkstücks ausgeführt. Dieses Werkstück ist in der Zentrierausnehmung 35a durch Fixierungselemente 35b befestigbar. Diese Fixierungselemente 35b sind längs des Pfeiles 35c bewegbar, um das Werkstück in der Station B zu fixieren und in der Station A zu lösen. Die Fixierungselemente 35b können zwischen der Lösestellung und der Fixierungsstellung (letztere in Figur 8 gezeigt) durch stationäre Nockenmittel verstellt werden, die bei B und A vorgesehen sind. In Figur 8 ist ein Biegewerkzeug 44 gezeichnet, welches mit dem Werkstück in Station c zusammenwirkt. Das Biegewerkzeug 44 ist durch eine Führung 44a geführt und durch einen rotierenden Nocken 44b angetrieben. Die Biegeoperation erfolgt während des Stillstands des Bandes 10, das heißt, im wesentlichen während der Rückkehrbewegung des Klemmzangenträgers 17b zwischen dem rechten Anschlag 17d und dem linken Anschlag 17d der Figur 2.

Die beweglichen Teile der Bearbeitungseinrichtung sind durch eine zentrale Antriebseinheit 45 angetrieben. Der Nocken 44b ist durch die zentrale Antriebseinheit 45 über ein Getriebe 44c angetrieben. Die Klemmwirkung der Klemmzange 17a ist durch die zentrale Antriebseinheit 45 über ein Getriebe 17k gesteuert. Die hin- und hergehende Bewegung des Klemmzangenträgers 17b ist durch die zentrale Antriebseinheit 45 durch ein Getriebe 17l gesteuert. Die Klemmwirkung der Klemmzange 19a ist durch die zentrale Antriebseinheit 45 über ein Getriebe 19b gesteuert. Die Bewegung des Arretierstifts 22a ist durch die zentrale Antriebseinheit 45 durch ein Getriebe 22d gesteuert.

Die Bearbeitungseinrichtung kann Biege- und Stanzwerkzeuge zur Zusammenarbeit mit dem jeweiligen durch den Werkstückträger 35 gehaltenen Werkstück aufweisen. Weiterhin können Bohr- oder Gewindebohreinrichtungen in einer der Positionen a bis e vorgesehen sein.

Ferner können Montage-Werkzeuge in einer der Positionen a bis e vorgesehen sein, zum Beispiel zum Zusammensetzen von Isolatoren und Leitern elektrischer Geräte.

Die Bearbeitungsmittel sind längs der Bearbeitungsstrecke B-A in den Stationen a,b,c,d und e angeordnet. Während der Bearbeitungsoperationen ist das Band durch die Führungsmittel 28 gestützt, welche an den Längsrändern des Bands anliegen. Es können auch noch zusätzliche Stützungsmittel vorgesehen sein, um die Werkstückträger 35 auch von unten her abzustützen. Weiterhin können stationäre Festhaltemittel vorgesehen sein, um die Werkstückträger 35 in den jeweiligen Bearbeitungsstationen a bis e zusätzlich festzuhalten. Diese Festhaltemittel können mit den Längsseitenflächen der Werkstückträger zum Eingriff gebracht werden, um die Werkstückträger während der jeweiligen Bearbeitungsschritte starr festzuhalten.

Es ist eine spezielle Ausführungsform der Erfindung gezeigt und beschrieben worden, um die Anwendung der Erfindungsprinzipien zu erläutern; selbstverständlich kann die Erfindung auch im Rahmen der Ansprüche in anderer Weise verwirklicht werden, ohne von diesen Prinzipien abzuweichen.

Die Bezugszeichen in den Ansprüchen sind nur zur Erleichterung des Verständnisses eingeführt worden und sollen keine Beschränkung darstellen.

## Patentansprüche

1. Schrittweise bewegte Transporteinrichtung, insbesondere zum Einsatz in Bearbeitungsgeräten, umfassend ein zu einer im wesentlichen losefreien Schleife geschlossenes Transportband (10), welches über mindestens zwei betriebsmäßig konstant achsbeabstandete Umlenkungen (12) geführt ist und mit einem Schrittantrieb (17,22) in Wirkverbindung steht,
dadurch gekennzeichnet,
daß die Umlenkungen antriebslos sind, daß der Schrittantrieb (17,22) von einer längs eines Trums des Transportbandes (10) oszillierend hin- und herbeweglichen Bandklemmvorrichtung (17), welche bei Bewegung entsprechend der beabsichtigten Vorschubrichtung (18) des Transportbandes (10) dieses klemmt und mitnimmt und bei Bewegung entgegen dieser Vorschubrichtung (18) des Transportbandes (10) außer Klemmeingriff mit dem Transportband (10) ist, und ferner von einer Bandarretierungsvorrichtung (22) gebildet ist, welche das Transportband (10) in Umlaufrichtung festhält, wenn die Klemmvorrichtung (17) außer Klemmeingriff mit dem Transportband (10) steht, und das Transportband (10) dann freigibt, wenn die Klemmvorrichtung (17) in Klemmeingriff mit dem Transportband (10) steht, wobei vorzugsweise in jedem Betriebszeitpunkt das Transportband (10) entweder von der Bandklemmvorrichtung (17) oder von der Bandarretierungsvorrichtung (22) erfaßt ist.

2. Transporteinrichtung nach Anspruch 1,
dadurch gekennzeichnet,
daß die Bandarretierungsvorrichtung (22) formschlüssig wirksam ist.

3. Transporteinrichtung nach Anspruch 1 oder 2,
dadurch gekennzeichnet,
daß die Bandarretierungsvorrichtung (22) als Positionskorrekturvorrichtung ausgebildet ist in der Weise, daß an der Bandarretierungsvorrichtung (22) ein Bandeingriffsorgan (22) mit mindestens einer zu seiner Eingriffsrichtung (22b) geneigten Eingriffsschräge (22c) angebracht ist, welche bei beginnendem Eingriff die Bandstellung ggf. unter Überwindung des Klemmeingriffs der Bandklemmvorrichtung (17a) korrigiert.

4. Transporteinrichtung nach Anspruch 3,
dadurch gekennzeichnet,
daß das Bandeingriffsorgan (22) derart gesteuert ist, daß die Eingriffsschräge (22c) in zunächst losen Eingriff mit einer Eingriffsstelle (24) des Transportbands (10) tritt, bevor die Bandklemmvorrichtung (17a) gelöst wird, daß hierauf die Bandklemmvorrichtung (17a) gelöst wird und daß hierauf der positionskorrigierende Eintritt der Eingriffsschräge (22c) in die Eingriffsstelle (24) des Transportbands (10) erreicht wird, nachdem die Bandklemmvorrichtung (17a) gelöst ist.

5. Transporteinrichtung nach einem der Ansprüche 1 bis 4,
dadurch gekennzeichnet,
daß die Bandarretierungsvorrichtung - gegebenenfalls neben einer Positionskorrekturvorrichtung - eine stationäre Klemmhaltevorrichtung für das Transportband umfaßt.

6. Transporteinrichtung nach Anspruch 5,
dadurch gekennzeichnet,
daß die stationäre Klemmhaltevorrichtung jeweils erst wirksam wird, nachdem die Positionskorrekturvorrichtung eine Bandkorrektur durchgeführt hat.

7. Transporteinrichtung nach einem der Ansprüche 1 bis 6,
dadurch gekennzeichnet,
daß die Umlenkungen (12) von drehbar gelagerten, nichtangetriebenen Umlenkrollen (12) gebildet sind.

8. Transporteinrichtung nach einem der Ansprüche 1 bis 7,
dadurch gekennzeichnet,
daß das Transportband (10) spannbar ist.

9. Transporteinrichtung nach einem der Ansprüche 1 bis 8,
dadurch gekennzeichnet,
daß mindestens eine der Umlenkungen (12) oder ein zwischen den Umlenkungen (12) gelegenes ggf. gefedertes Spannorgan (16) mit einer Spannvorrichtung verbunden ist.

10. Transporteinrichtung nach einem der Ansprüche 1 bis 9,
dadurch gekennzeichnet,
daß auf dem Transportband (10) Teilehalter zum Transport von Teilen angebracht sind, insbesondere Werkstückhalter zum Transport von durch das Bearbeitungsgerät zu bearbeitenden Werkstücken.

11. Transporteinrichtung nach einem der Ansprüche 1 bis 10,
dadurch gekennzeichnet,
daß das Transportband (10) ein biegeelastisches Metallband, insbesondere ein biegeelastisches Stahlband, ist.

12. Transporteinrichtung nach einem der Ansprüche 1 bis 10,
dadurch gekennzeichnet,
daß das Transportband (10) zumindest auf einem Teil seines Umlaufweges durch Linearführungsmittel (26,28) geführt ist, bei Verwendung im Zusammenhang mit einem Bearbeitungsgerät in demjenigen Teil seines Umlaufweges, in dem Bearbeitungsvorgänge an den transportierten Werkstücken erfolgen.

13. Transporteinrichtung nach einem der Ansprüche 1 bis 12,
dadurch gekennzeichnet,
daß das Transportband (10) von einem biegeelastischen Metallband oder dergleichen, insbesondere einem biegeelastischen Stahlband, gebildet ist und daß in einem mittleren Bereich des Metallbandes Zungen (32) derart freigeschnitten sind, daß sie in zur Schleifenachse parallelen Gelenkzonen (34) mit dem Metallband (10) einstückig und biegeelastisch zusammenhängen, wobei diese Zungen (32) zur Aufnahme von Teilehaltern (bei 36), insbesondere Werkstückhaltern, ausgebildet sind und wobei die Zungen (32) ggf. der Einwirkung der Linearführungsmittel unterliegen.

14. Transporteinrichtung nach Anspruch 13,
dadurch gekennzeichnet,
daß die Zungen (32) durch im wesentlichen U-förmige Freischnittlinien (30) begrenzt sind, deren Schenkelabschnitte im wesentlichen in der Bandlängsrichtung verlaufen und deren Stegabschnitte im wesentlichen quer zur Bandlängsrichtung verlaufen.

15. Transporteinrichtung nach Anspruch 14,
dadurch gekennzeichnet,
daß jeweils zwei durch eine gemeinsame Gelenkzone (34) miteinander verbundene Zungen (32) eine Doppelzunge bilden, welche gemeinsam zur Aufnahme eines starren Teilehalters (35) ausgebildet sind.

16. Transporteinrichtung nach einem der Ansprüche 13 bis 15,
dadurch gekennzeichnet,
daß die Zungen (32) mit Perforationen (36) zur Befestigung von Teilehaltern (35) ausgeführt sind.

17. Transporteinrichtung nach einem der Ansprüche 13 bis 16,
dadurch gekennzeichnet,
daß das Metallband (10) mit Randbereichen (10f) auf Anlageflächen (12f) der Umlenkungen (12) geführt ist, und daß zwischen den Anlageflächen (12f) in den Umlenkungen (12) Ausnehmungen (12g) vorgesehen sind, welche an der Schleifeninnenseite des Metallbandes (10) gelegene Befestigungsmittel zur Befestigung der Teilehalter (35) aufnehmen.

18. Transporteinrichtung nach Anspruch 17,
dadurch gekennzeichnet,
daß im Falle der Ausbildung der Umlenkungen (12) als Umlenkrollen (12) die Umlenkrollen (12) mit zylindrischen Anlageflächen (12f) für das Metallband (10) und mit jeweils mindestens einer zwischen den zylindrischen Anlageflächen (12f) gelegenen Ringnut (12g) ausgeführt sind.

19. Transporteinrichtung nach einem der Ansprüche 13 bis 18,
dadurch gekennzeichnet,
daß der Auslenkwinkel der Zungen (32) durch jeweils mindestens einen Auslenkwinkelbegrenzer (50) begrenzt ist, vorzugsweise auf dasjenige Mindestmaß, das einer tangentialen Anlage der Teilehalter (35) an den Umlenkungen (12) entspricht.

20. Transporteinrichtung nach einem der Ansprüche 1 bis 19,
wobei das Transportband (10) vorzugsweise von einem Metallband (10), insbesondere Stahlband (10), gebildet ist,
dadurch gekennzeichnet,
daß das Transportband (10) an der Verbindungsstelle von zwei stumpf einander gegenüberliegenden Bandenden (10a,10b) durch ein Klemmplattenpaar (37) oder Klemmblechpaar miteinander verbunden ist, wobei diese Klemmplatten (37) bzw. Klemmbleche an der Schleifeninnenseite und der Schleifenaußenseite des Transportbandes (10) anliegend jeweils den Stoß (10c) der Bandenden (10a,10b) in Schleifenumfangsrichtung überbrücken und durch Verbindungsmittel (38,40) miteinander verbunden sind, welche die beiden Bandenden (10a,10b) durchdringen.

21. Transporteinrichtung nach Anspruch 19,
dadurch gekennzeichnet,
daß die Verbindungsmittel (38,40) von Schraubbolzenmuttereinheiten (38,40) gebildet sind.

22. Transporteinrichtung nach Anspruch 20 oder 21,
dadurch gekennzeichnet,
daß die Klemmplatten (37) bzw. Klemmbleche in Bandlängsrichtung in formschlüssigem Eingriff mit den Bandenden (10a,10b) stehen.

23. Transporteinrichtung nach Anspruch 22,
dadurch gekennzeichnet,
daß bei Ausbildung der Verbindungsmittel (38,40) mit Schraubbolzenmuttereinheiten (38,40) die Schraubbolzen (38) Bohrungen (41) der Klemmplatten (37) bzw. Klemmbleche und Bohrungen (42) der Bandenden (10a,10b) durchsetzen, deren Durchmesser dem Schraubbolzendurchmesser exakt entspricht.

24. Transporteinrichtung nach einem der Ansprüche 1 bis 21,
dadurch gekennzeichnet,
daß das Transportband (10) an den Umlenkungen (12) jeweils mit einer Randzone (10f) auf einer Anlagefläche (12f) aufliegt, und daß zwischen den Anlageflächen (12f) jeweils eine Ausnehmung (12g) für die Aufnahme von Ringschlußelementen (37) des Transportbands (10), wie Klemmplatten (37) bzw. Klemmbleche in den Umlenkungen (12) vorgesehen ist.

25. Transporteinrichtung nach Anspruch 24,
dadurch gekennzeichnet,
daß bei Ausbildung der Umlenkungen (12) als Umlenkrollen (12) an diesen Umlenkrollen (12) zylindrische Anlageflächen (12f) und zwischen diesen zylindrischen Anlageflächen (12f) eine Ringnut (12g) zur Aufnahme der schleifeninneren Klemmplatte (37) bzw. des schleifeninneren Klemmblechs vorgesehen ist.

26. Transporteinrichtung nach einem der Ansprüche 2 bis 25,
dadurch gekennzeichnet,
daß das Eingriffsorgan (22a) der Arretierungsvorrichtung (22) zum Eingriff in eine Eingriffsausnehmung (24') eines Teilehalters (35) oder einer Klemmplatte (37) bzw. eines Klemmblechs ausgebildet ist.

## Claims

1. Intermittently moved conveyor, in particular for use in processing installations, comprising a conveyor belt (10) which is closed to form a substantially release-free loop, is guided via at least two return means (12) which are constantly axially spaced in terms of operation and co-operates with a step-by-step drive (17, 22), characterised in that the return means are drive-less, the step-by-step drive (17, 22) is formed by a belt gripping device (17) which is reciprocable in an oscillating manner along a run of the conveyor belt (10), grips and entrains the conveyor belt during movement in the intended advance direction (18) of the conveyor belt (10) and disengages from the conveyor belt (10) during movement against this advance direction (18) of the conveyor belt (10) and, moreover, is formed by a belt arresting device (22) which secures the conveyor belt (10) in the direction of circulation when the gripping device (17) is disengaged from the conveyor belt (10) and releases the conveyor belt (10) when the gripping device (17) engages with the conveyor belt (10), the conveyor belt (10) preferably being grasped at each moment of operation either by the belt gripping device (17) or by the belt arresting device (22).

2. Conveyor according to Claim 1, characterised in that the belt arresting device (22) acts positively.

3. Conveyor according to Claim 1 or 2, characterised in that the belt arresting device (22) is constructed as a position correcting device by mounting, on the belt arresting device (22), a belt engaging element (22) with at least one engagement slope (22c) which is inclined to its engagement direction (22b) and, at the beginning of engagement, corrects the belt position optionally by overcoming the gripping action of the belt gripping device (17a).

4. Conveyor according to Claim 3, characterised in that the belt engaging element (22) is controlled in that the engagement slope (22c) initially engages loosely with an engagement location (24) of the conveyor belt (10) before the belt gripping device (17a) is released, in that the belt gripping device (17a) is then released and in that the position correcting entry of the engagement slope (22c) into the engagement location (24) of the conveyor belt (10) is then achieved after the belt gripping device (17a) is released.

5. Conveyor according to one of Claims 1 to 4, characterised in that the belt arresting device comprises - optionally in addition to a position correcting device - a stationary securing device for the conveyor belt.

6. Conveyor according to Claim 5, characterised in that the stationary securing device does not come into effect in each case until the position correcting device has performed a belt correction.

7. Conveyor according to one of Claims 1 to 6, characterised in that the return means (12) are formed by rotatably mounted non-driven return rollers (12).

8. Conveyor according to one of the Claims 1 to 7, characterised in that the conveyor belt (10) is tensionable.

9. Conveyor according to one of Claims 1 to 8, characterised in that at least one of the return means (12) or an optionally spring-loaded tensioning element (16) located between the return means (12) is connected to a tension device.

10. Conveyor according to one of Claims 1 to 9, characterised in that part holders for conveying parts are mounted on the conveyor belt (10), in particular workpiece holders for conveying workpieces to be processed by the processing installation.

11. Conveyor according to one of Claims 1 to 10, characterised in that the conveyor belt (10) is a resilient metal belt, in particular a resilient steel belt.

12. Conveyor according to one of Claims 1 to 10, characterised in that the conveyor belt (10) is guided at least over a proportion of its course by linear guide means (26, 28), when used in conjunction with a processing installation, in that part of its course in which the processing processes are carried out on the conveyed workpieces.

13. Conveyor according to one of Claims 1 to 12, characterised in that the conveyor belt (10) is formed by a resilient metal belt or the like, in particular resilient steel belt, and that, in a central region of the metal belt, tongues (32) are cut free such that they are connected in an integral and resilient manner to the metal belt (10) in joint regions (34) parallel to the loop axis, wherein these tongues (32) are constructed to receive part holders (at 36), in particular workpiece holders and wherein the tongues (32) are optionally subjected to the action of the linear guide means.

14. Conveyor according to Claim 13, characterised in that the tongues (32) are limited by substantially U-shaped cut lines (30) with their arm portions extending substantially in the longitudinal direction of the belt and their bridging portions extending substantially transversely to the longitudinal direction of the belt.

15. Conveyor according to Claim 14, characterised in that each two tongues (32) joined together by a common joint zone (34) form a double tongue and are constructed together to receive a rigid part holder (35).

16. Conveyor according to one of Claims 13 to 15, characterised in that the tongues (32) are constructed with perforations (36) for fixing part holders (35).

17. Conveyor according to one of Claims 13 to 16, characterised in that the metal belt (10) is guided with edge regions (10f) on contact faces (12f) of the return means (12) and in that recesses (12g) are provided between the contact faces (12f) in the return means (12) to receive fixing means located on the interior of the loop of the metal belt (10) for fixing the part holders (35).

18. Conveyor according to Claim 17, characterised in that, if the return means (12) are constructed as return rollers (12), the return rollers (12) are constructed with cylindrical contact faces (12f) for the metal belt (10) and with at least one respective annular groove (12g) located between the cylindrical contact faces (12f).

19. Conveyor according to one of Claims 13 to 18, characterised in that the deflection angle of the tongues (32) is limited by at least one respective deflection angle limiter (50), preferably to the minimum size corresponding to tangential contact of the part holders (35) on the return means (12).

20. Conveyor according to one of Claims 1 to 19, wherein the conveyor belt is preferably formed by a metal belt (10), in particular steel belt (10), characterised in that the conveyor belt (10) is connected at the connecting point of two abutting belt ends (10a, 10b) by a pair of gripping plates (37) or gripping sheets, wherein these gripping plates (37) or gripping sheets resting on the interior of the loop and the exterior of the loop of the conveyor belt (10) each bridge the joint (10c) of the belt ends (10a, 10b) in the peripheral direction of the loop and are connected to one another by connecting means (38, 40) which penetrate the two belt ends (10a, 10b).

21. Conveyor according to Claim 19, characterised in that the connecting means (38, 40) are formed by stud and nut units (38, 40).

22. Conveyor according to Claim 20 or 21, characterised in that the gripping plates (37) or gripping sheets engage positively with the belt ends (10a, 10b) in the longitudinal direction of the belt.

23. Conveyor according to Claim 22, characterised in that when the connecting means (38, 40) are constructed with stud and nut units (38, 40), the studs (38) pass through bores (41) in the gripping plates (36) or gripping sheets and bores (42) in the belt ends (10a, 10b), the diameter of which corresponds exactly to the diameter of the stud.

24. Conveyor according to one of Claims 1 to 21, characterised in that the conveyor belt (10) rests on the return means (12) in each case with an edge region (10f) on a contact face (12f) and in that a respective recess (12g) for receiving annular closure elements (37) of the conveyor belt (10) such as gripping plates (37) or gripping sheets is provided in the return means (12) between the respective contact faces (12f).

25. Conveyor according to Claim 24, characterised in that, when the return means (12) are constructed as return rollers (12), cylindrical contact faces (12f) are provided on these return rollers (12) and an annular groove (12g) for receiving the gripping plate (37) inside the loop or the gripping sheet inside the loop is provided between these cylindrical contact faces (12f).

26. Conveyor according to one of Claims 2 to 25, characterised in that the engaging element (22a) of the arresting device (22) is constructed for engagement in an engagement recess (24') of a part holder (35) or a gripping plate (37) or a gripping sheet.

## Revendications

1. Dispositif de manutention à avance pas à pas destiné en particulier à être utilisé dans des équipements d'usinage, comportant un tapis de transport (10), fermé en une boucle pratiquement sans mou, lequel passe sur au moins deux renvois (12) d'écartement axial constant en service et est en liaison active avec un mécanisme d'entraînement pas à pas (17, 22), caractérisé en ce que les renvois ne sont pas entraînés, en ce que le mécanisme d'entraînement pas à pas (17, 22) est formé par un dispositif de serrage de tapis (17) oscillant dans un mouvement de va-et-vient le long d'un brin du tapis de transport (10), lequel dispositif de serrage serre et entraîne le tapis de transport (10), lors du déplacement suivant le sens d'avance (18) voulu pour le tapis (10) et, lors d'un déplacement dans le sens contraire à ce sens d'avance (18) du tapis de transport (10), n'est pas en prise de serrage avec le tapis (10), et est formé en outre par un dispositif d'arrêt de tapis (22) qui fixe le tapis (10) dans le sens de circulation, lorsque le dispositif de serrage (17) n'est pas en prise et qui libère le tapis (10) lorsque le dispositif de serrage est en prise de serrage avec le tapis (10), le tapis de transport (10) étant de préférence saisi, à chaque instant de fonctionnement, soit par le dispositif de serrage de tapis (17), soit par le dispositif d'arrêt de tapis (22).

2. Dispositif de manutention selon la revendication 1, caractérisé en ce que le dispositif d'arrêt (22) opère par concordance de forme.

3. Dispositif de manutention selon la revendication 1 ou 2, caractérisé en ce que le dispositif d'arrêt de tapis (22) est un dispositif de correction de position, en ce que sur le dispositif d'arrêt de tapis (22) est monté un organe d'engagement de tapis (22) avec au moins une surface oblique d'engagement (22c), inclinée vers son sens d'engagement (22b), qui au début de l'engagement corrige la position du tapis en surmontant éventuellement l'engagement de serrage du dispositif de serrage de tapis (17a).

4. Dispositif de manutention selon la revendication 3, caractérisé en ce que l'organe d'engagement de tapis (22) est commandé de manière que la surface oblique d'engagement (22c) s'engage d'abord librement avec un point d'engagement (24) du tapis de transport (10), avant que le dispositif de serrage de tapis (17a) ne soit dégagé, en ce qu'ensuite le dispositif de serrage de tapis (17a) est dégagé et en ce qu'ensuite est obtenue la pénétration, corrigeant la position, de la surface oblique d'engagement (22c) dans le point d'engagement (24) du tapis (10), après que le dispositif de serrage de bande (17a) a été dégagé.

5. Dispositif de manutention selon l'une des revendications 1 à 4, caractérisé en ce que le dispositif d'arrêt de tapis - éventuellement en plus d'un dispositif de correction de position - comporte un dispositif fixe de maintien de serrage pour le tapis de transport.

6. Dispositif de manutention selon la revendication 5, caractérisé en ce que le dispositif fixe de maintien de serrage n'opère chaque fois qu'après que le dispositif de correction de position a exécuté une correction du tapis.

7. Dispositif de manutention selon l'une des revendications 1 à 6, caractérisé en ce que les renvois (12) sont formés par des poulies de renvoi (12) non entraînées, montées tournantes.

8. Dispositif de manutention selon l'une des revendications 1 à 7, caractérisé en ce que le tapis de transport (10) peut être tendu.

9. Dispositif de manutention selon l'une des revendications 1 à 8, caractérisé en ce que l'un au moins des renvois (12) ou un organe de tension (16), placé ou suspendu entre les renvois (12), est relié à un dispositif de tension.

10. Dispositif de manutention selon l'une des revendications 1 à 9, caractérisé en ce que sur le tapis de transport (10) sont montés des organes de retenue de pièces pour le transport de pièces, en particulier des organes de retenue de pièces d'usinage devant être usinées par l'équipement d'usinage.

11. Dispositif de manutention selon l'une des revendications 1 à 10, caractérisé en ce que le tapis de transport (10) est un tapis métallique élastique en flexion, en particulier une bande d'acier élastique en flexion.

12. Dispositif de manutention selon l'une des revendications 1 à 10, caractérisé en ce que le tapis de transport (10) est guidé au moins sur une partie de son parcours par des moyens de guidage linéaires (26, 28), dans le cas d'une utilisation avec un équipement d'usinage, dans la partie de son parcours dans laquelle des opérations d'usinage sont effectuées sur les pièces transportées.

13. Dispositif de manutention selon l'une des revendications 1 à 12, caractérisé en ce que le tapis de transport (10) est formé par un tapis métallique élastique en flexion ou similaire, en particulier une bande d'acier élastique en flexion, et en ce que dans une zone centrale du tapis métallique des languettes (32) sont découpées et dégagées de manière que dans des zones d'articulation (34), parallèles à l'axe de la boucle, elles soient d'un seul tenant avec le tapis métallique (10) et soient élastiques en flexion, ces languettes (32) étant conçues pour recevoir des organes de retenue d'éléments (en 36), en particulier des organes de retenue de pièces, et les languettes (32) étant éventuellement soumises à l'action des moyens de guidage linéaire.

14. Dispositif de manutention selon la revendication 13, caractérisé en ce que les lanquettes (32) sont délimitées par des lignes de découpe (30) sensiblement en U, dont les portions latérales s'étendent sensiblement dans la direction longitudinale du tapis et dont les portions intermédiaires s'étendent sensiblement transversalement à la direction longitudinale du tapis.

15. Dispositif de manutention selon la revendication 14, caractérisé en ce que deux languettes (32), reliées entre elles par une zone d'articulation (34) commune, forment une double languette et sont conçues pour recevoir ensemble un organe de retenue de pièces (35) rigide.

16. Dispositif de manutention selon l'une des revendications 13 à 15, caractérisé en ce que les languettes (32) présentent des perforations (36) en vue de la fixation d'organes de retenue de pièces (35).

17. Dispositif de manutention selon l'une des revendications 13 à 16, caractérisé en ce que le tapis métallique (10) est guidé par des zones de bordure (10f) sur des surfaces d'application (12f) des renvois (12), et en ce qu'entre les surfaces d'application (12f) sont prévus, dans les renvois (12), des évidements (12g) qui logent des moyens de fixation, placés sur le côté intérieur de la boucle du tapis métallique (10), pour fixer les organes de retenue de pièces (35).

18. Dispositif de manutention selon la revendication 17, caractérisé en ce que dans le cas où les renvois (12) sont configurés sous la forme de poulies de renvoi (12), celles-ci sont réalisées avec des surfaces d'application (12f) cylindriques pour le tapis métallique (10) et avec au moins une rainure annulaire (12g), située entre les surfaces d'application (12f) cylindriques.

19. Dispositif de manutention selon l'une des revendications 13 à 18, caractérisé en ce que l'angle de déviation des lanquettes (32) est limité pour chacune d'elles par au moins un limiteur d'angle de déviation (50), de préférence à la valeur minimale qui correspond à une application tangentielle des organes de retenue de pièces (35) sur les renvois (12).

20. Dispositif de manutention selon l'une des revendications 1 à 19, dans lequel le tapis de transport (10) est formé de préférence par un tapis métallique (10), en particulier une bande d'acier (10), caractérisé en ce que le tapis de transport (10) est relié, au point de liaison de deux extrémités de tapis (10a, 10b), se faisant face bout à bout, par une paire de plaques de serrage (37) ou une paire de tôles de serrage, ces plaques de serrage (37) ou tôles de serrage s'appliquant contre le côté intérieur de la boucle et le côté extérieur de la boucle du tapis de transport (10) pour recouvrir dans chaque cas le joint (10c) des extrémités (10a, 10b) du tapis dans la direction périphérique de la boucle et étant reliées entre elles par des moyens de liaison (38, 40), qui traversent les deux extrémités (10a, 10b) du tapis.

21. Dispositif de manutention selon la revendication 19, caractérisé en ce que les moyens de liaison (38, 40) sont formés par des unités à vis et écrou (38, 40).

22. Dispositif de manutention selon la revendication 20 ou 21, caractérisé en ce que les plaques de serrage (37) ou les tôles de serrage sont en prise par concordance de forme avec les extrémités (10a, 10b) du tapis, dans la direction longitudinale de celui-ci.

23. Dispositif de manutention selon la revendication 22, caractérisé en ce que dans le cas où les moyens de liaison (38, 40) sont des unités à vis et écrou (38, 40), les vis (38) traversent des alésages (41) des plaques de serrage (37) ou des tôles de serrage et des alésages (42) des extrémités (10a, 10b) du tapis, dont le diamètre correspond exactement à celui des vis.

24. Dispositif de manutention selon l'une des revendications 1 à 21, caractérisé en ce que le tapis de transport (10) repose, aux renvois (12), par une zone de bordure (10f) sur une surface d'application (12f), et en ce qu'entre les surfaces d'application (12f) il est prévu chaque fois dans les renvois (12) un évidement (12g) destiné à recevoir des éléments de fermeture en boucle (37) du tapis de transport (10), tels que des plaques de serrage (37) ou des tôles de serrage.

25. Dispositif de manutention selon la revendication 24, caractérisé en ce que dans le cas où les renvois (12) sont conçus sous la forme de poulies de renvoi (12), il est prévu sur celles-ci des surfaces d'application (12f) cylindriques et entre ces surfaces d'application (12f) cylindriques, une rainure annulaire (12g) destinée à recevoir la plaque de serrage (37) intérieure à la boucle ou la tôle de serrage intérieure à la boucle.

26. Dispositif de manutention selon l'une des revendications 2 à 25, caractérisé en ce que l'organe d'engagement (22a) du dispositif d'arrêt (22) est conçu pour s'engager dans un évidement d'engagement (24') d'un organe de retenue de pièces (35) ou d'une plaque de serrage (37) ou d'une tôle de serrage.
